# FASCICULE DE BREVET EUROPEEN

(11) **EP 2 727 212 B1**
(45) Date de publication et mention de la délivrance du brevet: **26.05.2021**
(21) Numéro de dépôt: 12744033.7
(22) Date de dépôt: 02.07.2012
(51) Int. Cl.: H02J 7/00, G01R 31/36

(54) **PROCEDE ET SYSTEME DE CONNEXION/DECONNEXION D'UN VEHICULE ELECTRIQUE A UNE BORNE DE CHARGE**
VERFAHREN UND SYSTEM ZUM VERBINDEN UND LÖSEN EINES ELEKTROFAHRZEUGS MIT BZW. VON EINER LADESTATION
METHOD AND SYSTEM FOR CONNECTING/DISCONNECTING AN ELECTRIC VEHICLE TO/FROM A CHARGING TERMINAL

(30) Priorité: 30.06.2011 FR 1155897
(43) Date de publication de la demande: 07.05.2014
(73) Titulaire: Bluecarsharing, 92420 Vaucresson (FR)
(72) Inventeur: LAMBRINOS, Clément, F-93100 Montreuil (FR); AUGUSTIN, Aymeric, F-92410 Ville d'Avray (FR); BARROIS, Raphaël, F-75017 Paris (FR); ROUYER, Julien, F-92800 Puteaux (FR); RESSAYRE, Sandrine, F-78610 Auffargis (FR); RODRIGUES, Ruben, F-95160 Montmorency (FR); LEBETTRE, Lionel, E-92150 Suresnes (FR)
(74) Mandataire: IPAZ
(86) Numéro de dépôt international: PCT/FR2012/051524
(87) Numéro de publication internationale: WO 2013/001252

(56) Documents cités:
- WO-A1-2009/039406
- JP-A- 2011 010 399
- US-A- 5 596 261
- US-A1- 2011 106 329

## Description

La présente invention concerne un procédé de connexion/déconnexion d'un véhicule électrique à une borne de charge. Elle concerne également un système mettant en oeuvre un tel procédé et également une borne de charge mise en œuvre dans un tel procédé et/ou système.

Le domaine de l'invention est le domaine de la connexion et de la déconnexion d'un véhicule électrique à une borne de charge.

### Etat de la technique

On connait actuellement des véhicules fonctionnant avec une ou plusieurs batteries électriques et des bornes, dites de charges, permettant de recharger les batteries des véhicules lorsque le véhicule est en stationnement.

Les bornes de charge actuelles comprennent un câble munie à son extrémité d'une fiche qui est prévue pour collaborer avec une prise électrique au niveau du véhicule pour réaliser une connexion électrique permettant de recharger les batteries.

Les bornes de charge sont prévues pour être installées sur des parkings publics ou privés compte-tenu du fait que la ou les batteries du véhicule électrique sont rechargées lorsque le véhicule électrique est en stationnement.

Or, les bornes de charge sont exposées aux dégradations extérieures et en particulier aux actes de malveillance tels que des actes de vols, de vandalisme rendant les bornes de charge inutilisables mais également à des actes de vols d'électricité.

Par ailleurs, il n'est pas prévu actuellement de bornes de charge permettant de s'assurer d'une utilisation correcte de la borne de charge par les utilisateurs, ce qui permet de réduire considérablement les risques de vandalisme de la borne. Les documents US5596261A, WO2009/039406A1, US2011/106329A1 et JP2011010399A divulguent des exemples de systèmes et procédés concernant la connexion/déconnexion d'un véhicule électrique à une borne de chargement.

Un but de l'invention est de remédier aux inconvénients précités.

Un autre but de l'invention est de proposer un procédé et un système de connexion/déconnexion d'un véhicule électrique à une borne de charge diminuant les actes de vandalisme, et les risques de vol.

Enfin, un autre but de l'invention est de proposer un procédé et un système de connexion/déconnexion d'un véhicule électrique à une borne de charge permettant d'assurer d'une utilisation correcte de la borne de charge.

### Exposé de l'invention

L'invention propose d'atteindre au moins l'un des buts précités par un procédé de connexion/déconnexion d'un véhicule électrique à une borne de charge comprenant au moins un moyen capteur agencé pour détecter l'état d'au moins un élément de ladite borne de charge, ledit procédé comprenant les étapes suivantes :
- mesure d'au moins une valeur d'au moins un paramètre par ledit moyen capteur,
- comparaison de la valeur dudit paramètre à au moins une valeur prédéterminée, et
- signalisation d'une anomalie, si la valeur n'est pas égale à la valeur prédéterminée.

Le procédé selon l'invention permet ainsi une connexion/déconnexion d'un véhicule électrique à une borne de charge diminuant les actes de vandalisme, les risques de vol. En effet, par l'utilisation d'un moyen capteur agencé pour mesurer au moins une donnée relative à l'état d'un élément de la borne de connexion il est possible de surveiller tout au long des étapes de connexion et de déconnexion que la borne de charge est correctement utilisée par l'utilisateur. Il pourrait également être possible de guider l'utilisateur pendant chacune des étapes pour la connexion/déconnexion du véhicule à/de la borne de charge.

Pour au moins un paramètre, la comparaison de la valeur mesurée à une valeur prédéterminée peut être réalisée au niveau d'un site distant, dit site central, ledit procédé comprenant en outre un envoi vers ledit site central de ladite valeur mesurée.

En variante, pour au moins un paramètre, la comparaison de la valeur mesurée à une valeur prédéterminée peut être réalisée par un autre dispositif, dit borne de location, se trouvant sur le même site que la borne de charge, ledit procédé comprenant en outre un envoi vers ladite borne de location de ladite valeur mesurée.

Dans l'un ou l'autre des cas indiqués ci-dessus, les valeurs mesurées peuvent être envoyées vers le dispositif distant de façon périodique, sur demande du dispositif distant, ou suite à un évènement prédéterminé, par exemple une identification d'un utilisateur sur la borne de charge.

Bien entendu, pour au moins un paramètre, la comparaison de la valeur mesurée à une valeur prédéterminée peut être réalisée par la borne de charge.

Dans tous les cas, la valeur mesurée peut être envoyée sous la forme d'une trame de donnée comprenant également un numéro d'identification relatif à la borne de charge. Les données peuvent être envoyées au travers d'un réseau de communication au moins en partie non filaire, tel qu'un réseau GPRS. Les données peuvent également être envoyées au travers d'une liaison filaire.

L'étape de signalisation peut comprendre une étape d'émission d'un signal sonore et/ou lumineux sur la borne de charge, la borne de location, ou au niveau du véhicule associé à la borne de charge, s'il en existe un. Le signal est destiné à alerter l'utilisateur. Dans le cas où le signal est émis au niveau du véhicule, il s'agit d'un message affiché sur l'ordinateur de bord du véhicule par exemple. Ce message peut lui être envoyé car il est également associé à la borne de charge dans une base de données stockée dans l'organe - ou site - central.

Si l'étape de comparaison n'est pas effectuée par l'élément émetteur du signal d'alerte, notamment dans le cas où cet élément est le véhicule, l'étape de signalisation est précédée d'une étape de transmission d'un message à destination de cet élément.

L'étape de signalisation peut en supplément et/ou remplacement comprendre l'émission d'au moins une donnée de notification à destination de l'utilisateur ou d'un opérateur.

La donnée de notification est généralement envoyée par le site central. Si ce n'est pas ce site qui effectue l'étape de comparaison, cette étape est précédée de l'émission d'un message depuis l'élément qui effectue l'étape de comparaison vers le site central.

La donnée de notification peut être émise vers l'utilisateur ou l'opérateur sur un appareil de communication portable qu'il détient, sous la forme de message SMS, MMS, ou courriels, etc.

Bien entendu, des mêmes données de notification ou des données différentes peuvent être émises vers différents destinataires.

Grâce aux données de notification, il est donc possible d'indiquer à l'utilisateur, où qu'il se trouve, que la borne de charge n'a pas bien été utilisée. On peut également lui transmettre des informations concernant les opérations à réaliser pour la connexion/déconnexion d'un véhicule à/de la borne de chargement et de lui indiquer les erreurs qu'il a commises.

Une ou plusieurs données peuvent également être émises vers le véhicule, cette ou ces données aptes à commander le déclenchement d'un signal d'activation, le signal d'activation empêchant le démarrage du véhicule.

On peut également envisager qu'un message soit émis vers le véhicule comprenant une donnée apte à commander le déclenchement d'un signal d'activation, le signal d'activation permettant, seul ou en combinaison avec d'autres signaux, le démarrage du véhicule. Ce message est alors envoyé lorsque les valeurs mesurées sont égales aux valeurs prédéterminées.

Le procédé selon l'invention peut en outre comprendre des étapes réalisant une identification d'un utilisateur, par exemple au travers d'une identification RFID mais aussi par clé ou saisie d'un identifiant, directement au niveau de la borne de charge ou au niveau de la borne de location.

Le paramètre mesuré peut être un ou plusieurs paramètres choisis parmi les paramètres suivants mesurés par un ou plusieurs capteurs adaptés et adéquatement agencés :
- position d'un câble de chargement comportant une fiche de connexion électrique, et/ou position de la fiche de connexion électrique,
- état d'une connexion électrique entre la borne de charge et le véhicule, et
- position ouverte/fermée d'un couvercle (ou capot) d'un compartiment de la borne de charge prévue pour accueillir le câble de chargement et/ou la fiche de connexion.

On notera que le procédé peut comprendre une étape de détermination d'une configuration (par exemple, prise ou remise du véhicule) et, en fonction du résultat de cette étape, une étape de détermination du ou des paramètres à comparer et/ ou des valeurs prédéterminées avec lesquelles les comparer lors de l'étape de comparaison.

Par exemple, lors de la prise du véhicule, on vérifie que le câble est bien rangé et que le couvercle est bien fermé et, lors de la remise de celui-ci, on vérifie que le câble est bien connecté au véhicule et également que le couvercle est bien fermé. Pour cela, il faut demander la comparaison de différents paramètres lors de l'étape de comparaison.

L'étape de détermination de la configuration est le plus souvent effectuée par le site central à partir des données stockées dans ses bases de données. Elle peut notamment être combinée à l'étape d'identification de l'utilisateur, et consister à vérifier si un véhicule est associé à l'utilisateur dans les bases de données.

Cette étape peut également être effectuée en vérifiant qu'un véhicule est associé à la borne sur laquelle l'utilisateur s'est identifié au moment de l'identification, à l'aide des bases de données de l'organe central ou des moyens de détection de la borne de charge.

Selon un autre aspect de l'invention il est proposé un système de connexion/déconnexion d'un véhicule électrique à une borne de charge, ledit système comprenant :
- au moins un moyen capteur disposé au niveau de ladite borne de connexion et agencé pour détecter l'état d'au moins un élément de ladite borne de charge,
- de moyens, dits de comparaison, pour comparer au moins une valeur d'au moins un paramètre mesurée par ledit moyen capteur à au moins une valeur prédéterminée, et
- des moyens de signalisation d'une anomalie, aptes à être activés si la valeur mesurée ne correspond pas à la valeur prédéterminée.

Les moyens de signalisation peuvent notamment être des moyens d'émission d'un signal sonore et/ou lumineux, de préférence agencés sur la borne de charge ou le véhicule, ou des moyens d'émission d'au moins une donnée de notification à destination d'un utilisateur ou d'un opérateur.

Avantageusement, les moyens de comparaison peuvent être disposés au niveau d'un site distant, dit central, ledit système comprenant en outre des moyens d'émission de données depuis la borne de charge vers ledit site distant.

Le moyen capteur peut comprendre au moins un capteur choisi dans la liste suivante :
- détecteur de l'établissement d'une connexion électrique entre le véhicule et la borne de charge,
- capteur de position d'une fiche de connexion électrique,
- capteur de position d'un câble comportant une fiche de connexion électrique, et
- capteur de position d'un capot d'un compartiment destiné à accueillir un câble/une fiche de connexion électrique.

Le système peut en outre comprendre des moyens d'identification pour la lecture d'au moins une donnée d'identification d'un utilisateur.

Les moyens d'identification peuvent être intégrés dans la borne de charge, ou dans une borne de location se trouvant sur le même site que la borne de charge.

Les moyens d'identification peuvent comprendre des moyens d'identification RFID, des moyens d'identification biométriques, etc...

Selon encore un autre aspect de l'invention il est prévu une borne de charge d'un véhicule électrique mise en œuvre dans le procédé ou le système selon l'invention.

La borne de charge selon l'invention comprend :
- au moins un connecteur électrique prévu pour coopérer avec au moins un connecteur électrique du véhicule pour établir une connexion électrique pour charger au moins une batterie dudit véhicule, et
- au moins un moyen capteur agencé pour détecter l'état d'au moins un élément de ladite borne de charge.

La borne de charge selon l'invention peut en outre comprendre des moyens d'émission/réception de données vers/depuis un site distant et/ou des moyens d'émission lumineux ou sonore.

La borne de charge peut en outre comprendre des moyens d'identification d'un utilisateur tels que des moyens d'identification RFID ou biométriques.

La borne de charge peut en outre comprendre un compartiment destiné à accueillir un câble/une fiche de connexion électrique. Le compartiment peut être équipé d'un capot.

Le moyen capteur peut comprendre au moins un capteur choisi dans la liste suivante :
- détecteur de l'établissement d'une connexion électrique entre le véhicule et la borne de charge,
- capteur de position d'une fiche de connexion électrique,
- capteur de position d'un câble comportant une fiche de connexion électrique, et
- capteur de position d'un capot d'un compartiment destiné à accueillir un câble/une fiche de connexion électrique.

L'invention s'applique particulièrement à la gestion d'un parc de véhicules électrique destinés à la location et pour lesquels une pluralité de stations d'accueil est prévue.

D'autres avantages et caractéristiques apparaîtront à l'examen de la description détaillée de modes de réalisation nullement limitatifs, et des dessins annexés sur lesquels :
- la figure 1 est une représentation schématique d'un système selon l'invention ;
- la figure 2 est une représentation schématique d'une borne de charge selon l'invention ; et
- la figure 3 est une représentation schématique d'un procédé selon l'invention.

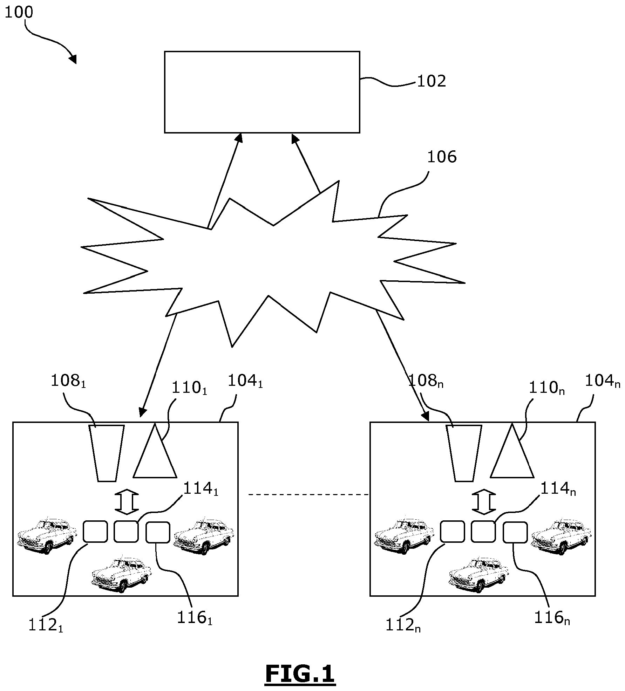

La figure 1 est une représentation schématique d'un système gestion globale d'un parc de véhicule électrique proposé à la location.

Le système 100 représenté sur la figure 1 comprend un site central 102 (également appelé organe central dans la suite de la description) connecté à plusieurs sites - ou stations - 104₁-104ₙ, dits de location au travers d'un réseau de communication 106 sans fil, par exemple GPRS, ou d'un réseau filaire, par exemple de type DSL. De préférence, chaque station est reliée au site central par l'intermédiaire des deux réseaux distincts, ce qui permet une connexion en continu même si l'un des réseau est défaillant.

Chaque station de location comprend une borne d'abonnement 108 pour l'enregistrement d'un nouvel abonné, une borne de location 110 pour la location d'un véhicule et plusieurs bornes de charge 112-116, chaque borne de charge étant prévue pour charger un véhicule muni d'une batterie électrique à un emplacement de stationnement.

Le site central 102 peut être connecté directement à chacune des bornes d'une station de location 104 au travers du réseau 106 ou seulement à la borne d'abonnement et/ou à la borne de location et/ou aux bornes de charge 112-116.

Au moins deux bornes d'une station de location sont connectées entre elles au travers d'une connexion filaire (non représentée).

Le site central 102 est également agencé pour se connecter à un véhicule électrique comprenant un boitier de connexion avec un ou plusieurs éléments du véhicule et/ou une interface de communication avec l'utilisateur, par l'intermédiaire d'un réseau GPRS. Chaque véhicule est de ce fait équipé d'une puce GSM.

Le site central 102 est également agencé pour échanger des informations avec un appareil de communication portable tel qu'un PDA, un téléphone portable, etc., porté par un opérateur du service de location et également relié au site central par l'intermédiaire d'un réseau GPRS.

Le système permet de gérer une pluralité de véhicules comprenant chacun une unité de commande apte à communiquer avec l'organe central et avec différents organes du véhicule, et une interface utilisateur.

Les utilisateurs sont aptes à interagir avec les différentes bornes ainsi qu'avec les différents éléments des véhicules. En outre, le service de location de véhicule avec le système selon l'invention peut être également effectué à l'aide des opérateurs et de leur terminal mobile tel qu'un PDA, qui peuvent intervenir dans le service.

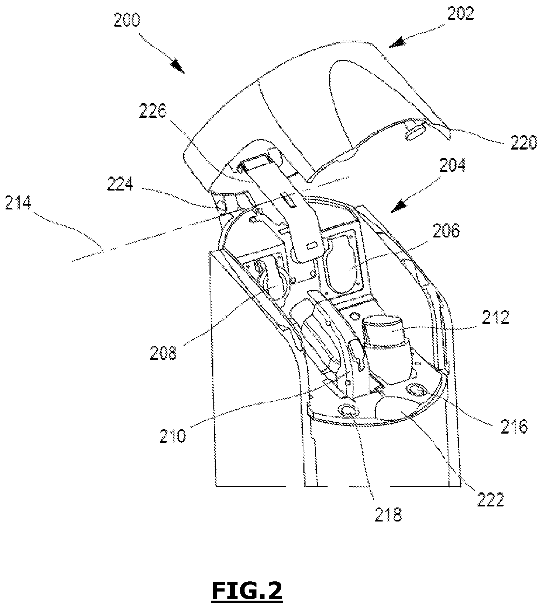

La figure 2 est une représentation schématique d'une borne de chargement selon l'invention.

La borne de chargement 200 comprend un capot ou un couvercle 202 mobile couvrant une zone/un compartiment 204 d'interface abonnés principalement située sous le couvercle mobile 202.

Cette zone 204 comporte une embase 206 de connecteur de borne de type 3 qui permet d'alimenter les véhicules particuliers.

La zone 204 comprend en outre un connecteur 208 de type E/F pour les deux roues électriques.

La zone 204 comprend également un câble comprenant :
- à l'une de ses extrémités un connecteur 210 de type 3 prévu pour se connecter au connecteur de borne 206, et
- à l'autre de ses extrémités un connecteur 212 prévu pour se connecter à un connecteur de véhicule.

Le câble (non représenté) portant ces deux connecteurs 210 et 212 est prévu pour être enroulé autour d'un enrouleur intégré dans la borne 200.

La borne 200 pourrait également comprendre uniquement un câble ou un connecteur de type femelle.

Deux composantes fonctionnelles sont également présentes dans cette zone 204 au-dessus du couvercle 202 :
- des moyens d'identification, tels que par exemple une cible et lecteur RFID (non représentés), pour permettre à un abonné d'accéder aux éléments sous le couvercle mobile 202, et
- un système d'éclairage d'état, par exemple à base de leds (vert, rouge, et bleu) dont l'état est visible sur le dessus du couvercle mobile 202 indiquant à l'abonné le statut de la place du véhicule et du véhicule.

Le couvercle 202 est articulé, en particulier en rotation, par exemple autour d'un axe horizontal 214.

Le couvercle 202 retombe de son propre poids sur le reste de la borne 200 et est verrouillé par au moins un moyen de verrouillage, tel que par exemple des ventouses magnétiques 216 et 218 qui écrasent un moyen d'étanchéité, tel qu'un joint d'étanchéité 220 permettant de rendre étanche le compartiment 204 comprenant les câbles.

Au moins un moyen capteur détecte la position du capot 202, par exemple un capteur 222 détectant sa retombée.

Une articulation 224 située à l'arrière de la coiffe permet une large ouverture pour accès aisé aux prises et aux fiches de charge.

Une ventouse 226 ou un moyen équivalent maintient la coiffe en position ouverte pendant un temps contrôlé pour permettre les manipulations de l'abonné.

La fonction de lecture RFID est intégrée dans cette coiffe sous la forme d'un coupleur avec antenne intégrée.

La fermeture du couvercle 202 assure l'écrasement du joint 220.

Les voyants d'état (rouge, vert, bleu) sont intégrés à la collerette du couvercle. Une fenêtre (non représentée) au niveau de la coiffe permet l'éclairement d'état de la borne 200.

Ainsi, lorsque l'utilisateur passe une carte RFID sur le lecteur, soit pour rendre le véhicule et le connecter au câble de la borne 200, soit pour prendre le véhicule et ranger le câble dans le compartiment 204, les ventouses magnétiques sont désactivées. L'utilisateur relève le couvercle 202 et effectue les actions nécessaires (rangement de la prise ou connexion du véhicule) selon le cas de figure. Puis, il rabaisse le couvercle 202 (s'il ne le fait pas, le couvercle 202 se rabaisse seul par son propre poids). Les ventouses magnétiques 216 et 218 effectuent leur action de verrouillage sans intervention extérieure s'il y a contact entre le couvercle 202 et le reste de la borne 200. Le couvercle 202 pourrait ne pas bien se verrouiller en cas d'obstacle empêchant volontairement ou involontairement la fermeture du couvercle 202.

La borne 200 comprend donc un moyen capteur 222 pour détecter la fermeture du couvercle, tel que par exemple un capteur de force pour détecter le poids du couvercle ou capteur optique, et un moyen capteur pour détecter le rangement du câble, tel que par exemple un capteur de force mesurant la tension du câble d'enroulement ou de position, le rangement du câble enclenchant un cliquet par exemple. Il comprend également un moyen capteur, tel qu'un fil pilote 3 (non représenté), détectant si le câble est bien branché dans le connecteur de type 3 et le véhicule.

Dans un mode de réalisation préféré, lorsque l'utilisateur déverrouille le couvercle 202, la borne de chargement 200 en informe le site central et lui envoie l'identifiant de l'utilisateur. Le site central mémorise alors l'horaire de début ou de fin de location.

Puis, au bout d'un temps prédéterminé après le déverrouillage du couvercle 202 par l'utilisateur, le site central interroge la borne de chargement ou la borne de location sur l'état des capteurs de la borne de chargement 200. Le site central est apte à communiquer avec la borne de location ou la borne de chargement par l'intermédiaire d'un réseau sans fil, tel qu'un réseau GPRS ou par un réseau filaire de type DSL. La borne de location est apte à communiquer avec la borne de charge par l'intermédiaire d'un réseau filaire.

Le message envoyé comprend notamment un identifiant de la borne de charge.

La borne de location ou la borne de charge transmet au site central les valeurs associées aux paramètres mesurées par les différents capteurs, chaque valeur pouvant être une valeur numérique ou binaire. Le site central les compare à des valeurs normales pour ces paramètres.

On notera que les valeurs peuvent être comparées directement par la borne de charge ou la borne de location, auquel cas on détermine au niveau de l'une de ces bornes si tout est en ordre pour la borne de charge.

Si une des valeurs des capteurs n'est pas conforme à la valeur attendue, par exemple couvercle non verrouillé, ou câble mal rangé lors de la prise du véhicule ou pas de connexion du câble lors de la remise du véhicule, le site central en avertit l'utilisateur.

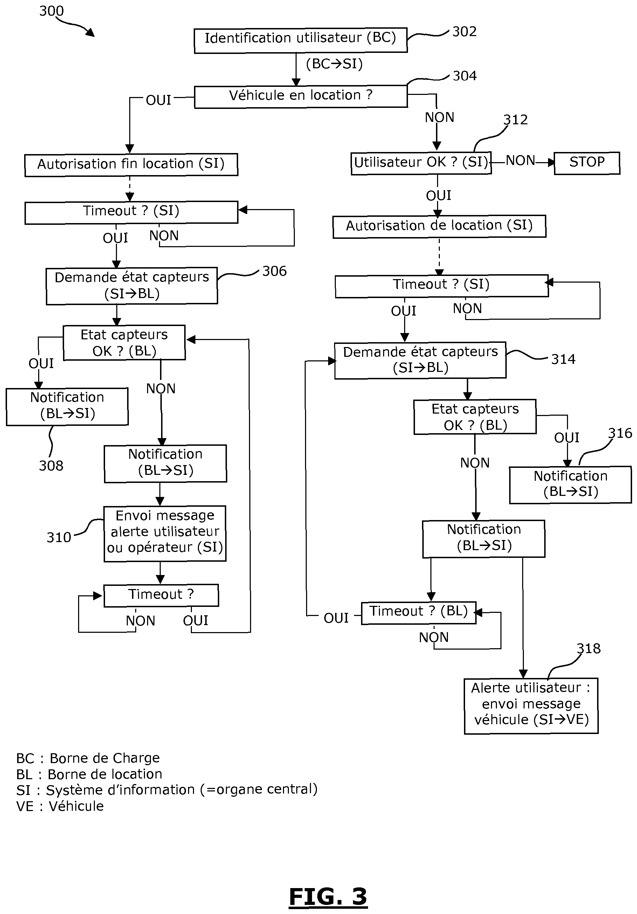

Nous allons maintenant décrire en référence à la figure 3 un exemple d'un procédé selon l'invention.

Le procédé 300 comprend une étape d'identification 302 de l'utilisateur, suivie d'une étape 304 visant à déterminer si l'utilisateur détient un véhicule en location (étape de détermination d'une configuration telle que décrite ci-dessus). Pour cela, la borne de charge envoie un message à l'organe central et celui-ci détermine à l'aide des bases de données qu'il stocke, si l'utilisateur identifié est associé à un véhicule. Si cela est le cas, cela signifie qu'il souhaite engager le processus de fin de location, alors que dans le cas contraire, cela signifie qu'il souhaite prendre un véhicule de location. On pourrait aussi s'assurer des intentions de l'utilisateur localement, en vérifiant si un véhicule est associé à la borne de charge sur laquelle l'utilisateur s'est identifié.

Dans le procédé décrit, si l'organe central détermine que l'utilisateur est associé à un véhicule, une procédure d'autorisation de fin de location, non détaillée ici, est réalisée par l'organe central, qui enregistre notamment l'heure de l'identification. Des premiers capteurs de la borne de chargement sont ensuite interrogés lors d'une étape 306 et ce après une durée donnée permettant à l'utilisateur d'effectuer les démarches de remise du véhicule.

Si les capteurs communiquent un état satisfaisant, une notification autorisant la fin de la location est envoyée à l'étape 308 à l'organe central et la fin de la location devient effective.

Si les capteurs communiquent un état non satisfaisant, une alerte est envoyée à l'utilisateur à l'étape 310 par l'organe central, lui demandant de corriger l'anomalie, et ce jusqu'à ce que les capteurs communiquent un état satisfaisant. Ce message est par exemple envoyé par SMS à l'utilisateur sur un terminal portable dont il a donné les coordonnées au moment de son abonnement au service.

Si on détermine lors de l'étape 304 que l'utilisateur souhaite prendre un véhicule, l'identité de l'utilisateur est vérifiée à l'étape 312. Si l'identité est erronée ou ne correspond pas à un utilisateur abonné, la procédure est arrêtée.

Si l'identité correspond à un utilisateur, une procédure d'autorisation de début de location est réalisée.

Des deuxièmes capteurs de la borne de charge sont interrogés lors d'une étape 314 et ce après une durée donnée permettant à l'utilisateur de déconnecter le véhicule de la borne de charge et de ranger le câble de charge. Ces capteurs peuvent être les mêmes que les premiers, ils peuvent également être totalement ou partiellement différents de ces premiers capteurs. Si une partie des capteurs forme un premier et un deuxième capteur, il est possible que les valeurs prédéterminées auxquelles on les compare ne soient pas les mêmes.

Si les capteurs communiquent un état satisfaisant suite à cette interrogation, une notification autorisant le début de la location est envoyée à l'étape 316.

Si les capteurs communiquent un état non satisfaisant une alerte est envoyée à l'utilisateur à l'étape 318, lui demandant de corriger l'anomalie, et ce jusqu'à ce que les capteurs communiquent un état satisfaisant. Cette alerte est envoyée sur les moyens d'interface du véhicule associé à la borne. De cette façon, l'utilisateur ne peut avoir accès aux fonctions offertes par cette interface et va être incité à aller rebrancher la borne correctement.

Le procédé selon l'invention comprend donc les étapes suivantes :
- identification d'un utilisateur auprès d'une unité de la station pour obtenir une autorisation d'accès à la borne de charge (borne comprenant un couvercle barrant l'accès aux éléments de charge, le couvercle étant par ailleurs verrouillé),
- vérification du statut d'un ou plusieurs éléments de la borne de charge, et
- si le statut d'au moins un de ces éléments n'est pas conforme à un statut prédéterminé, l'utilisateur ou un opérateur est averti.

L'étape d'identification 302 peut être effectuée notamment pour prendre ou rendre un véhicule. Elle marque généralement le début ou la fin de la location.

Cette étape 302 peut être effectuée directement sur la borne de charge à l'aide d'un moyen d'identification tel qu'une carte RFID. La borne de charge peut en effet comprendre un lecteur RFID.

Cette étape 302 pourrait toutefois être effectuée par d'autres moyens (identification sur la borne de location, par saisie sur un clavier par exemple). Généralement, mais non limitativement, l'étape d'identification implique la participation du site central qui comprend une base de données portant sur les droits d'accès des utilisateurs. La borne de charge ou la borne de location communique au site central l'identifiant de l'utilisateur et le site central retourne des données relatives à cet utilisateur, par exemple, une autorisation de location, une notification qu'une location est en cours, etc.

La vérification du statut de différents éléments peut notamment être la vérification de :
- verrouillage du couvercle de la borne de charge un laps de temps prédéterminé après le déverrouillage par l'utilisateur de celui-ci ou l'identification de l'utilisateur auprès de la station, détection par un capteur tel qu'un capteur de position, par exemple capteur optique, ou un capteur de force ;
- position rentrée du câble de charge, par exemple par l'utilisation d'un capteur de force ou de position ; et/ou
- connexion du câble avec le véhicule, par exemple par fil pilote.

En ce qui concerne la vérification du statut des éléments de la borne de charge, cette vérification peut être effectuée au niveau du site central ou de la station (borne de charge ou borne de location).

Dans le cas où cette étape est effectuée par le site central, le véhicule peut remonter les informations relatives au capteur périodiquement vers l'organe central.

De préférence, le site central interroge le véhicule un temps prédéterminé, par exemple, 2 minutes, après que l'étape d'identification se soit produite, comme décrit ci-dessus. En réponse à cette interrogation, la borne de charge transmet, éventuellement par l'intermédiaire de la borne de location, l'état des capteurs. Le site central les compare à des valeurs normales stockées dans une base de données et détermine s'il y a une anomalie sur la borne de charge.

Dans le cas où cette étape est effectuée par la station, la borne de charge rassemble les valeurs relatives à l'état des capteurs et les compare à des valeurs prédéterminées. La borne de location peut dans ce cas faire un retour au site central si elle détecte une anomalie.

L'avertissement ou la notification de l'utilisateur peut être effectué de plusieurs façons, éventuellement combinées :
- avertissement par SMS, e-mail,
- avertissement par l'intermédiaire d'une interface du véhicule, et/ou
- avertissement par l'intermédiaire d'un signal sonore ou lumineux sur la borne de charge.

Les étapes du procédé peuvent se produire lors de la prise d'un véhicule. On vérifie alors de préférence le verrouillage du couvercle et la position rentrée du câble. De préférence, le message est dans ce cas affiché sur le véhicule électrique. On peut même envisager d'empêcher le démarrage du véhicule électrique si le statut de la borne n'est pas considéré comme normal.

Elles peuvent également se produire lors de la remise d'un véhicule, auquel cas on vérifie de préférence le verrouillage du couvercle et la connexion du câble au véhicule. Le message est alors envoyé à l'utilisateur sur son portable par SMS de préférence. Il peut également être envoyé à un opérateur du service

En variante, on pourrait imaginer que l'organe central commande à la borne de location d'effectuer les vérifications nécessaires. Un tel message de l'organe central pourrait également comprendre une indication des valeurs à vérifier (un lien vers un modèle de données à vérifier située dans la borne de location ou les valeurs à vérifier directement), qu'il déterminerait en fonction des conditions (début ou fin de location).

Dans une autre variante, on peut également imaginer que la borne de location initie elle-même les vérifications. Elle détermine alors elle-même quelles sont les données à vérifier en fonction des données reçues de l'organe central lors de l'identification de l'utilisateur.

Lorsque c'est la borne de location qui effectue les différentes vérifications, elle en avertit généralement l'organe central. Elle peut également avertir l'organe central que tout est normal. Si l'organe central ne reçoit pas de réponse au bout d'un temps prédéterminé, il peut également alerter un opérateur.

Dans un exemple de réalisation (notamment lors de la remise du véhicule), pour avertir l'utilisateur, l'organe central compose un message à destination de l'utilisateur indiquant notamment l'anomalie et/ou l'adresse de la station et l'invitant à se rendre à cette station pour corriger l'anomalie. Ce message est envoyé par SMS à l'utilisateur.

Cela est effectué par une unité de communication de l'organe central comprenant notamment une puce GSM lui permettant de communiquer avec n'importe quel téléphone mobile. Le numéro de téléphone mobile de l'utilisateur est trouvé dans une base de données interne de l'organe central.

On peut également envisager que le message soit envoyé à un opérateur du service de location si l'on ne dispose pas du numéro de l'utilisateur ou si l'on arrive par à le joindre. On peut en outre imaginer que l'heure de fin de location reste inchangée dans le cas où l'utilisateur vient réparer l'anomalie dans un laps de temps donné (par exemple 15 minutes) mais que l'heure de fin de location est modifiée (heure de résolution de l'anomalie) si l'utilisateur ne vient pas corriger celle-ci. On peut également envisager d'envoyer un message à un opérateur du système au bout du laps de temps prédéterminé pour résoudre le problème.

Si l'utilisateur ne parvient pas à résoudre le problème du fait d'une défaillance interne de la borne de charge, il peut demander l'aide d'un opérateur ou le déclarer sur la borne de location auquel cas son heure de fin de location n'est pas modifiée et un opérateur est appelé.

Dans un mode de réalisation (notamment lors de la prise du véhicule), l'organe central compose un message à destination du véhicule. Ce dernier comprend en effet également une unité de communication permettant de communiquer avec l'organe central par le biais du réseau GPRS. Il comprend également un ordinateur de bord formant moyen d'interface sur lequel s'affiche le message. Pour l'envoi de ce message, l'organe central consulte une base de données dans laquelle chaque borne de charge est associée avec le véhicule stationné sur la place correspondant à cette borne de charge et envoie le message sur le véhicule correspondant.

L'organe central envoie au véhicule, en plus ou en remplacement du message, une donnée activant un signal de commande empêchant le démarrage du véhicule tant que la borne de charge n'est pas dans des conditions optimales. Le démarrage du véhicule peut en effet être conditionné par une pluralité de signaux de départ (signal activé par la donnée+ signal envoyé par moyen de démarrage tel que clé ou bouton de démarrage par exemple). Cela permettrait alors de s'assurer que l'utilisateur qui démarre a bien laissé la borne dans un état correct. Le véhicule comprend pour ce faire une unité de commande reliée au réseau et à différents organes du véhicule et permettant de commander ces organes. L'organe central peut dans ce cas envoyer deux messages séparés à l'unité de commande et à l'unité d'interface qui communiquent a priori chacune séparément avec l'organe central.

De même, si l'utilisateur ne parvient pas à résoudre le problème du fait d'une défaillance interne de la borne de charge, il peut demander l'aide d'un opérateur ou le déclarer sur la borne de location auquel cas un opérateur est appelé. Dans ce cas, on annule la location et on lui attribue un autre véhicule. Le véhicule et la place sur laquelle il se trouve peuvent de plus être déclarés indisponibles.

## Revendications

1. Procédé de connexion/déconnexion d'un véhicule électrique à une borne de chargement (112-116 ; 200), ladite borne de charge comprenant au moins un moyen capteur (216) agencé pour détecter l'état d'au moins un élément (202) de ladite borne de charge (112-116 ; 200), ledit procédé comprenant les étapes suivantes :
- mesure (306,314), par ledit moyen capteur (216), d'au moins une valeur d'au moins un paramètre relative à l'état d'un élément (202) de ladite borne de charge,
- comparaison (306, 314) de la valeur dudit paramètre à au moins une valeur prédéterminée, et
- signalisation d'une anomalie relative audit élément, si la valeur n'est pas égale à la valeur prédéterminée ;
ladite étape de signalisation comprenant une émission d'une ou plusieurs données vers le véhicule, cette ou ces données commandant le déclenchement d'un signal d'activation empêchant le démarrage du véhicule.

2. Procédé selon la revendication 1, **caractérisé en ce que**, pour au moins un paramètre, la comparaison de la valeur mesurée à une valeur prédéterminée est réalisée au niveau d'un site distant (102), dit central, ledit procédé comprenant en outre un envoi vers ledit site central de ladite valeur mesurée.

3. Procédé selon l'une quelconque des revendications précédentes, **caractérisé en ce que** pour au moins un paramètre, la comparaison de la valeur mesurée à une valeur prédéterminée est réalisée par un autre dispositif (108), dit borne de location, ledit procédé comprenant en outre un envoi vers ladite borne de location de ladite valeur mesurée.

4. Procédé selon l'une quelconque des revendications précédentes, dans lequel l'étape de signalisation comprend une étape d'émission d'un signal lumineux et/ou sonore sur la borne de charge, la borne de location, ou au niveau du véhicule associé à la borne de charge.

5. Procédé selon l'une quelconque des revendications précédentes, dans lequel l'étape de signalisation comprend une étape d'émission d'au moins une donnée de notification à destination de l'utilisateur ou d'un opérateur.

6. Procédé selon l'une quelconque des revendications précédentes, comprenant une étape d'identification de l'utilisateur.

7. Procédé selon l'une quelconque des revendications précédentes, dans lequel le paramètre mesuré peut être un ou plusieurs paramètres choisis parmi les paramètres suivants mesurés par un ou plusieurs capteurs adaptés et adéquatement agencés :
- position d'un câble de chargement comportant une fiche de connexion électrique, et/ou position de la fiche de connexion électrique,
- état d'une connexion électrique entre la borne de charge et le véhicule, et
- position ouverte/fermée d'un couvercle (ou capot) d'un compartiment de la borne de charge prévue pour accueillir le câble de chargement et/ou la fiche de connexion.

8. Procédé selon l'une quelconque des revendications précédentes, comprenant une étape de détermination d'une configuration (par exemple, prise ou remise du véhicule) et, en fonction du résultat de cette étape, une étape de détermination du ou des paramètres à comparer et/ ou des valeurs prédéterminées avec lesquelles les comparer lors de l'étape de comparaison.

9. Système (100) de connexion/déconnexion d'un véhicule électrique à une borne de charge (112-116 ; 200), ledit système comprenant :
- ledit véhicule électrique;
- au moins un moyen capteur (216) disposé au niveau de ladite borne de charge (112-116 ; 200) et agencé pour détecter l'état d'au moins un élément (202) de ladite borne de charge (112-116 ; 200),
- des moyens, dits de comparaison, pour comparer au moins une valeur d'au moins un paramètre mesurée par ledit moyen capteur (216) à au moins une valeur prédéterminée, et
- des moyens de signalisation d'une anomalie relative audit au moins un élément de la borne de charge si la valeur mesurée n'est pas égale à la valeur prédéterminée ;
**caractérisé en ce que** lesdits moyens de signalisation sont configurés pour émettre une ou plusieurs données vers le véhicule, cette ou ces données commandant le déclenchement d'un signal d'activation empêchant le démarrage du véhicule

10. Système selon la revendication 9, **caractérisé en ce que** les moyens de comparaison sont disposés au niveau d'un site distant (102), ledit système comprenant en outre des moyens d'émission de données depuis la borne de charge (112-116 ; 200) vers ledit site distant (102).

## Patentansprüche

1. Verfahren zum Verbinden/Trennen eines Elektrofahrzeugs mit/von einer Ladestation (112 bis 116; 200), wobei die Ladestation mindestens ein Sensormittel (216) umfasst, das dazu eingerichtet ist, den Zustand mindestens eines Elements (202) der Ladestation (112 bis 116; 200) zu erfassen, wobei das Verfahren die folgenden Schritte umfasst:
- Messung (306, 314) durch das Sensormittel (216) mindestens eines Werts mindestens eines Parameters in Zusammenhang mit dem Zustand eines Elements (202) der Ladestation,
- Vergleich (306, 314) des Werts des Parameters mit mindestens einem vorbestimmten Wert, und
- Meldung einer Anomalie in Zusammenhang mit dem Element, falls der Wert nicht gleich dem vorbestimmten Wert ist;
wobei der Meldungsschritt eine Sendung eines Datums oder mehrerer Daten zu dem Fahrzeug umfasst, wobei dieses Datum oder diese Daten das Auslösen eines Aktivierungssignals, das das Anlassen des Fahrzeugs verhindert, befehlen.

2. Verfahren nach Anspruch 1, **dadurch gekennzeichnet, dass** für mindestens einen Parameter der Vergleich des Messwerts mit einem vorbestimmten Wert im Bereich eines entfernten Standorts (102), der zentral genannt wird, ausgeführt wird, wobei das Verfahren außerdem ein Senden des Messwerts zu dem zentralen Standort umfasst.

3. Verfahren nach einem der vorstehenden Ansprüche, **dadurch gekennzeichnet, dass** für mindestens einen Parameter der Vergleich des Messwerts mit einem vorbestimmten Wert von einer anderen Vorrichtung (108), Mietstation genannt, ausgeführt wird, wobei das Verfahren außerdem ein Senden des Messwerts zu der Mietstation umfasst.

4. Verfahren nach einem der vorstehenden Ansprüche, wobei der Meldungsschritt einen Sendeschritt eines Leuchtsignals und/oder eines akustischen Signals auf die Ladestation, die Mietstation oder im Bereich des Fahrzeugs, das mit der Ladestation assoziiert ist, umfasst.

5. Verfahren nach einem der vorstehenden Ansprüche, wobei der Meldungsschritt einen Sendeschritt mindestens eines Bekanntgabedatums zu dem Benutzer oder einem Bediener umfasst.

6. Verfahren nach einem der vorstehenden Ansprüche, das einen Identifikationsschritt des Benutzers umfasst.

7. Verfahren nach einem der vorstehenden Ansprüche, wobei der gemessene Parameter ein oder mehrere Parameter sein kann, die aus den folgenden Parametern ausgewählt sind, die von einem oder mehreren zweckdienlichen und entsprechend eingerichteten Sensoren gemessen werden:
- Position eines Ladekabels, das einen elektrischen Stecker umfasst, und/oder die Position des elektrischen Steckers,
- Zustand einer elektrischen Verbindung zwischen der Ladestation und dem Fahrzeug, und
- geöffnete/geschlossene Position eines Deckels (oder einer Haube) eines Fachs der Ladestation, das dazu vorgesehen ist, das Ladekabel und/oder den Stecker aufzunehmen.

8. Verfahren nach einem der vorstehenden Ansprüche, das einen Schritt des Bestimmens einer Konfiguration (zum Beispiel Übernehmen oder Rückgabe des Fahrzeugs) umfasst, und, in Abhängigkeit von dem Resultat dieses Schritts, einen Schritt des Bestimmens des oder der zu vergleichenden Parameter und/oder der vorbestimmten Werte, mit welchen sie bei dem Vergleichsschritt zu vergleichen sind.

9. System (100) zum Verbinden/Trennen eines Elektrofahrzeugs mit/von einer Ladestation (112 bis 116; 200), wobei das System umfasst:
- das Elektrofahrzeug;
- mindestens ein Sensormittel (216), das im Bereich der Ladestation (112 bis 116; 200) angeordnet und dazu eingerichtet ist, den Zustand mindestens eines Elements (202) der Ladestation (112 bis 116; 200) zu erfassen,
- Mittel, Vergleichsmittel genannt, um mindestens einen Wert mindestens eines Parameters, der von dem Fühlermittel (216) gemessen wird, mit mindestens einem vorbestimmten Wert zu vergleichen, und
- Mittel zum Melden einer Anomalie in Zusammenhang mit dem mindestens einen Element der Ladestation, falls der Messwert nicht gleich dem vorbestimmten Wert ist;
**dadurch gekennzeichnet, dass** die Meldemittel dazu konfiguriert sind, ein Datum oder mehrerer Daten zu dem Fahrzeug auszugeben, wobei dieses Datum oder diese Daten das Auslösen eines Aktivierungssignals, das das Anlassen des Fahrzeugs verhindert, befehlen.

10. System nach Anspruch 9, **dadurch gekennzeichnet, dass** die Vergleichsmittel im Bereich eines entfernten Standorts (102) angeordnet sind, wobei das System außerdem Mittel zum Senden von Daten ausgehend von der Ladestation (112 bis 116; 200) zu dem entfernten Standort (102) umfasst.

## Claims

1. A method for connection/disconnection of an electric vehicle at a charging terminal (112-116;200), said terminal comprising at least one sensor means (216) arranged in order to detect the state of at least one element (202) of said charging terminal (112-116;200), said method comprising the following steps:
- measuring (306,314), by said sensor means (216), at least one value of at least one parameter relating to the state of an element (202) of said charging terminal,
- comparing (306,314) the value of said parameter with at least one predetermined value, and
- reporting an anomaly, if the value is not equal to the predetermined value; said reporting step comprising transmitting one or more items of data to the vehicle, said item(s) of data being capable of controlling the triggering of an activation signal preventing the starting of the vehicle.

2. The method according to claim 1, **characterized in that**, for at least one parameter, the comparison of the measured value with a predetermined value is carried out at a remote site (102), called the central site, said method also comprising sending said measured value to said central site.

3. The method according to any one of the previous claims, **characterized in that** for at least one parameter, the comparison of the measured value with a predetermined value is carried out by another device (108), called a rental terminal, said method also comprising sending said measured value to said rental terminal.

4. The method according to any one of the previous claims, in which the reporting step comprises a step of emitting a light and/or audible signal on the charging terminal, the rental terminal, or on the vehicle associated with the charging terminal.

5. The method according to any one of the previous claims, in which the reporting step comprises a step of transmitting at least one item of notification data to the user or to an operator.

6. The method according to any one of the previous claims, comprising a user identification step.

7. The method according to any one of the previous claims, in which the measured parameter can be one or more parameters chosen from the following parameters measured by one or more suitable and appropriately arranged sensors:
- position of a charging cable comprising an electrical connection plug, and/or position of the electrical connection plug,
- state of an electrical connection between the charging terminal and the vehicle, and
- open/closed position of a lid (or cover) of a compartment of the charging terminal provided for receiving the charging cable and/or the connection plug.

8. The method according to any one of the previous claims, comprising a step of determining a configuration (for example, collection or return of the vehicle) and, depending on the result of this step, a step of determining the parameter(s) to be compared and/or the predetermined values with which they are to be compared during the comparison step.

9. A system (100) for connection/disconnection of an electric vehicle at a charging terminal (112-116; 200), said system comprising:
- said electric vehicle,
- at least one sensor means (216) arranged on said charging terminal (112-116; 200) and arranged in order to detect the state of at least one element (202) of said charging terminal (112-116;200),
- means, called comparison means, for comparing at least one value of at least one parameter measured by said sensor means (216) with at least one predetermined value, and
- means for reporting an anomaly relating to said at least one element of said charging terminal if the measured value is not equal to the predetermined value;
**characterized in that** said means for reporting are configured to transmit one or more items of data to the vehicle, said item(s) of data being capable of controlling the triggering of an activation signal preventing the starting of the vehicle

10. The system according to claim 9, **characterized in that** the comparison means are arranged at a remote site (102), said system also comprising means for the transmission of data from the charging terminal (112-116; 200) to said remote site (102).
